# EUROPEAN PATENT APPLICATION

(11) **EP 4 203 498 A1**
(43) Date of publication of application: **28.06.2023**
(21) Application number: 22215447.8
(22) Date of filing: 21.12.2022
(51) Int. Cl.: H04R 1/10, G08B 21/24, G01S 11/06, H04W 4/029

(54) **SYSTEM AND METHOD FOR DETERMINING A STATE OF AN ELECTRONIC DEVICE**

(30) Priority: 24.12.2021 SG 10202114364
(71) Applicant: Trek 2000 International Ltd, Singapore 508769 (SG)
(72) Inventor: TAN, Joon Yong Wayne, 508769 Singapore (SG); KUAN, Mun Kwong, 508769 Singapore (SG)
(74) Representative: Viering, Jentschura & Partner mbB Patent- und Rechtsanwälte

(57) **Abstract**

Aspects concern a system and method for determining a state of an electronic device comprising a processor arranged in wireless signal communication with the electronic device to obtain a first wireless signal associated with the electronic device, convert the first wireless signal to a first signal measurement, and compare the first signal measurement with a first threshold; wherein if the first signal measurement is less than the first threshold, the processor is operable to obtain a plurality of successive wireless signals associated with the first wireless signal and corresponding signal measurements over a predetermined period to determine a gradient measure, and if the gradient measure is negative over the predetermined period, the processor determines that the electronic device is in a first state.

## Description

### TECHNICAL FIELD

The disclosure relates generally to electronic device, a system and method for determining a state of an electronic device.

### BACKGROUND

Electronic equipment or devices such as cellular telephones, computers, may generate different signals, such as audio signals, during operations and telephone calls. Electronic devices such as ear buds are used to facilitate transmit/receipt of audio signals. Some ear buds have cords that allow the ear buds to be plugged into an electronic device via an input/output (I/O) port or jack.

Wireless ear buds provide users with more flexibility than wired ear buds, but can be challenging to use. A user may also inadvertently drop one of a pair of ear buds during usage without noticing. Some time may have elapsed before the user notices that one or more ear buds is missing, making locating the dropped ear bud(s) difficult. This problem may also exist in other electronic equipment such as wireless ear phones, thumb drives, wireless mini-speakers etc.

In many situations, mobile devices may also be misplaced by a user or inadvertently left at a location. Similarly, some time may have elapsed before the user discovers that the mobile device is missing and the misplaced mobile device may already be taken by a third party.

It would therefore be desirable to be able to detect electronic devices and alert a user when an electronic device is in a misplaced state.

### SUMMARY

Various embodiments concern a system and method for determining a state of an electronic device, such as a misplaced state, with minimum modifications to hardware components in the electronic device.

According to the present disclosure, a system for determining a state of an electronic device method as claimed in claim 1 is provided. A method for determining a state of an electronic device is defined in claim 16. A wireless ear bud device as a particular electronic device is defined in claim 8.

The dependent claims define some examples associated with the system, wireless ear bud device and method respectively.

### BRIEF DESCRIPTION OF THE DRAWINGS

The invention will be better understood with reference to the detailed description when considered in conjunction with the non-limiting examples and the accompanying drawings, in which:
- FIG. 1 show a schematic of a system for determining a state of an electronic device in accordance with various embodiments;
- FIG. 2 shows a flow diagram of a method for determining a state of an electronic device in accordance with various embodiments;
- FIG. 3A shows a use case of the system and/or method as depicted in FIG. 1 and FIG. 2; FIG. 3B shows another use case of the system and/or method as depicted in FIG. 1 and FIG. 2;
- FIG. 4A and FIG. 4B show examples of determining thresholds for use in the method for determining whether an ear bud is in a misplaced state with respect to another ear bud in accordance with various embodiments; and
- FIG. 5 shows a multiple readings/measurements of signal strength obtained for three illustrative cases for deriving respective gradient measures.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

The disclosure illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the disclosure. Thus, it should be understood that although the present disclosure has been specifically described in exemplary embodiments and optional features, modification and variation of the disclosure embodied herein may be resorted to by those skilled in the art.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "electronic device" refers broadly to any device having electronic circuitry, including wireless circuitry. A wireless wearable electronic device such as a wireless ear bud may communicate with another electronic device such as a mobile phone or another wireless ear bud.

As used herein, the term "mobile device" or "wireless device" or "wireless communication device" is intended to broadly cover different types of devices that can wirelessly receive and/or transmit signals. For example, and not for any limitation, a wireless communication device can include any one or a combination of the following: a two-way radio, a cellular telephone, a mobile phone, a smartphone, a two-way pager, a wireless messaging device, a laptop computer, a personal digital assistant, a tablet computing device, a pair of ear buds, chargers, and other similar devices.

As used herein, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

As used herein, the terms "first", "second", etc. in the description of the present application are used for distinguishing between the descriptions and not necessarily for describing a sequential or chronological order.

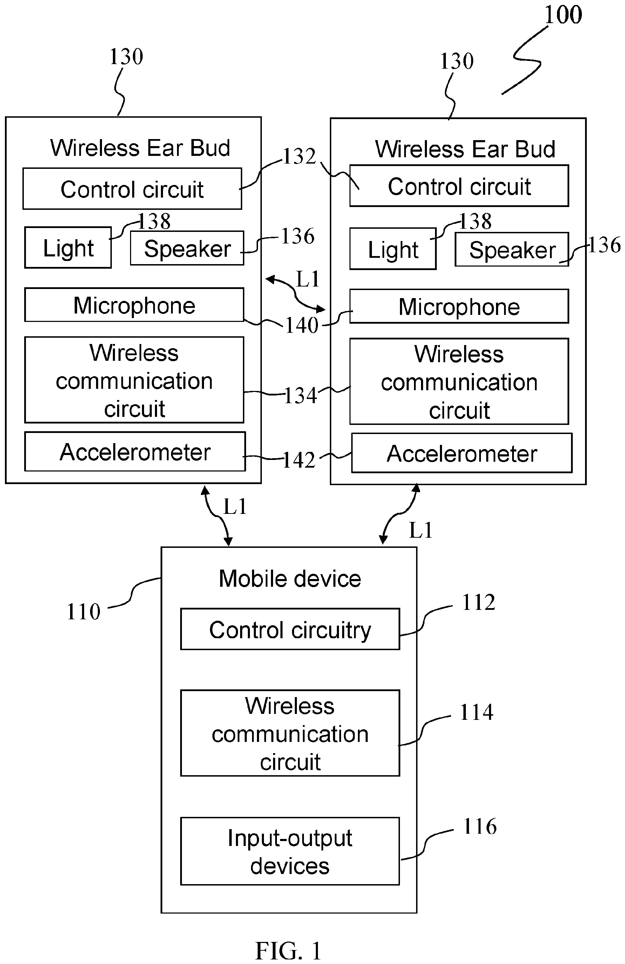

A schematic diagram of an illustrative system in which various electronic devices communicate with one another is shown in FIG. 1. It is appreciable that the system 100 shown in FIG. 1 envisages a mobile device 110 functioning as a host, and/or a wireless earbud 130 functioning as a host.

Referring to FIG. 1, a mobile device 110 may be part of an embedded system, a part of a home network, or may be any other suitable electronic equipment. Mobile device 110 may have a control circuitry 112. Control circuitry 112 may include a processing and storage circuitry for supporting the operation of mobile device 110 and therefore may include one or more processors. Storage circuitry may include hard disk drive storage, nonvolatile memory, read-only memory, volatile memory, etc. The processing circuitry may be used to control the operation of device 110, and may include components such as one or more microprocessors, microcontrollers, digital signal processors, base-band processors, power management units, audio chips, application specific integrated circuits, etc. Various types of processing circuit arrangements as known to a skilled person may be contemplated.

Device 110 may also include a wireless communication circuit 114 (e.g., radio-frequency transceivers) for supporting communications with wireless wearable devices such as wireless ear buds 130 or other wireless wearable electronic devices via wireless links L1. Ear buds 130 may have wireless communications circuitry 134 for supporting communications with circuitry 114 of device 110. Ear buds 110 may also communicate with each other using wireless circuitry 134. In general, the wireless devices that communicate with device 110 may be any suitable portable and/or wearable equipment. Configurations in which wireless wearable devices 130 are ear buds are sometimes described herein as a non-limiting example.

Input-output devices 116 may be used to allow data to be supplied to or received by device 110 and to allow data to be provided from or transmitted from device 110 to external devices. Input-output devices 116 may include buttons, joysticks, scrolling wheels, touch pads, key pads, keyboards, microphones, speakers, displays (e.g., touch screen displays), tone generators, vibrators (e.g., piezoelectric vibrating components, etc.), cameras, sensors, light-emitting diodes and other status indicators, data ports, etc. Operation of device 110 can be controlled by supplying user commands/actions through input-output devices 116 and may receive status information, notifications and other output from device 110 using the output resources of input-output devices 116.

Each ear bud device 130 comprises a control circuity 132 similar to control circuitry 112, wireless communication circuitry 134 (e.g., one or more radio-frequency transceivers for supporting wireless communications over L1), a first indicator 136 which may be in the form of a speaker, a second indicator 138 which may be in the form of a light module, such as a light-emitting diode (LED) ring or LED strip. The ear bud device 130 may include a microphone 140 and an accelerometer 142. The microphone 140 may gather audio input data such as the voice of a user who is making a telephone call. The accelerometer 142 may detect movement associated with the ear buds 130, for example, when an ear bud 130 is dropped onto the ground or floor. The accelerometer 142 may also detect a force applied on the ear bud 130 by a user (e.g. a tap or double tap) which may be associated with some operations of the ear bud device 130. In some embodiments, the output of the accelerometer 142 may be in the form of pulses.

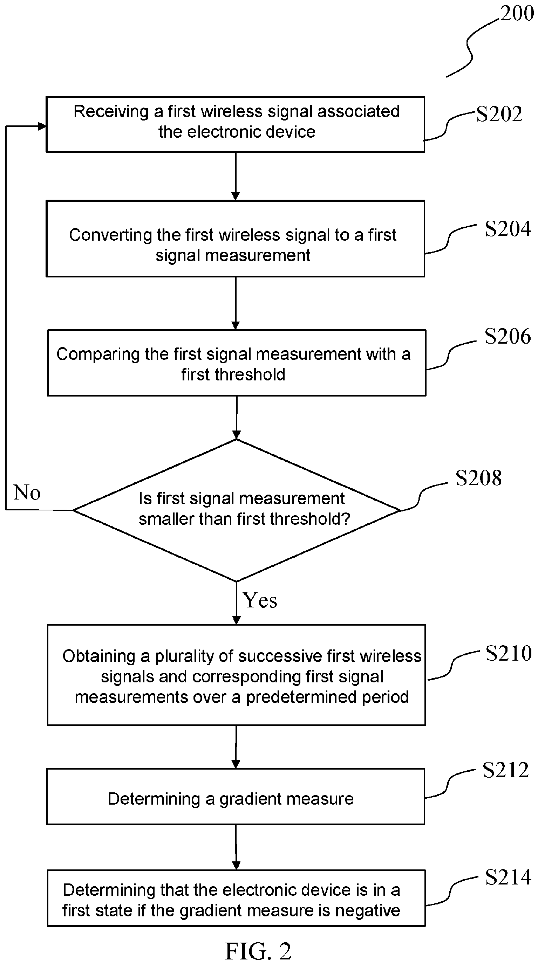

One or more processors within the control circuitry 112, 132 may contain software codes stored within one or more computer-readable media (including a non-transitory computer readable medium) of the control circuitry 112, 113, such that, when executed, performs a method 200 as illustrated in FIG. 2.

The method 200 for determining a state of an electronic device comprises the steps of: receiving a first wireless signal associated the electronic device (step S202); converting the first wireless signal to a first signal measurement (step S204) or deriving the first signal measurement from the first wireless signal; and comparing the first signal measurement with a first threshold (step S206), such that if the first signal measurement is less than the first threshold, the method 200 further comprises the steps of: obtaining a plurality of successive wireless signals associated with the first wireless signal and corresponding signal measurements over a predetermined period (step S210); and determining a gradient measure (step S212); wherein if the gradient measure is negative over the predetermined period, the electronic device is determined to be in a first state (step S214).

The system 100 and method 200 may be used for determining if an electronic device is in a misplaced state in accordance with various embodiments. One possible occurrence of misplacement of an electronic device may arise from a wireless ear bud 130 (the electronic device) dropping off a user's ear when the user is exercising (e.g. jogging in a park or on a treadmill). Another possible occurrence of misplacement of an electronic device may arise from a user forgetting his mobile phone 110 after a meal at a restaurant. Through the firmware installed in the control circuitry 112, 132, background monitoring of wireless signals emitted from the wireless ear bud 130 and mobile phone 110 may be carried out, transmitted and received via the wireless communication circuits 114, 134. The background monitoring may comprise executing the method 200 at every predetermined period, e.g. 4 times a second, to receive a first wireless signal and convert or obtain the first wireless signal to a first signal measurement. For example, the control circuitry 132 of each wireless ear bud 130 may be used to obtain the wireless signal from the other wireless ear bud 130 and from the mobile phone 110. The control circuitry 112 of the mobile phone 110 may be used to obtain the wireless signal from the pair of wireless ear buds 130.

In some embodiments, the first signal measurement is a received signal strength indicator (RSSI) of the first wireless signal expressed in a negative scale, or an inverse of a signal strength of the first wireless signal. In general, the first signal measurement is an indication of the signal strength of the first wireless signal received. Where RSSI expressed in a negative scale is used, a first threshold of -75 decibel-milliwatts (dbm) may be set.

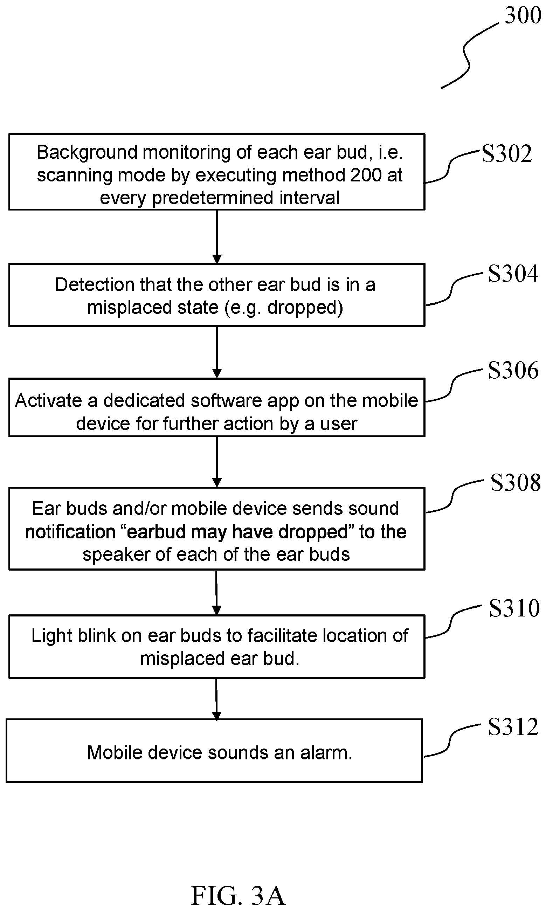

FIG. 3A shows a flow diagram 300 associated with a particular use case where an ear bud drops from a user's ear during usage. The ear bud, when activated, monitors the incoming wireless signals from another ear bud, and from the mobile device using the method 200 (step S302). Upon detection that the other ear bud is in a misplaced state or has dropped from the user's ear (step S304), a software application may be activated on the mobile phone 110 for further action by the user (step S306). A first control signal (in the form of a sound notification) may be sent to the ear buds 130 via the control circuitry 132 or control circuity 112 to the first indicator device (e.g. speaker 136) informing the user that an ear bud has been dropped (step S308). In addition, a second control signal (in the form of a power pulse-wave signal) may be sent to the light module 138 of the ear buds to cause the LED lights to blink in an alternating on/off manner (step S310). The blinking of lights may be performed in a manner to facilitate the searching for the dropped or misplaced ear bud.

The use case of FIG. 3A assumes that one ear bud 130 is dropped while the other remains in the user's ear, hence the sound notification made in step S308 achieves the alerting of the user. In the situation where both ear buds are dropped/misplaced and therefore the user cannot hear the sound notification generated in step S308, the mobile device 110 may optionally be configured to send an alarm (step S312) to notify the user. Such an alarm may be a sound, a light, a text message, an email message, or combinations of one or more of the aforementioned notifications.

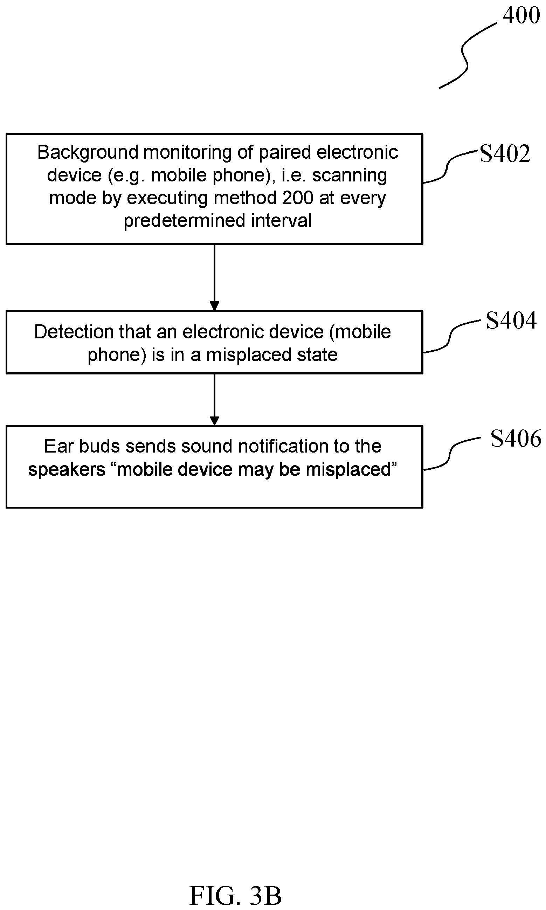

FIG. 3B shows a flow diagram 400 associated with another use case where the mobile device 110 is misplaced. Background monitoring of paired electronic device, that is, the mobile phone 110 may be performed via the firmware installed on the control circuitry 132 of each ear bud. Method 200 may be executed at every predetermined interval (step S402).

Upon detecting that the mobile device 110 is in a misplaced state (step S404), the control circuit 132 of ear bud sends a sound notification to the speakers 136 (step S406) to alert the user that the mobile device 110 has been/ is missing.

It is contemplated that the wireless signals of various devices 110, 130 that are sent and/or received via wireless link L1 may be processed to derive or calculate signal measurements. In some embodiments, before the system 100 and method 200 are deployed, various parameters such as a first threshold and a second threshold may be predetermined. In some embodiments, the first threshold and second threshold may be dynamically adjusted when the system 100 is in operation.

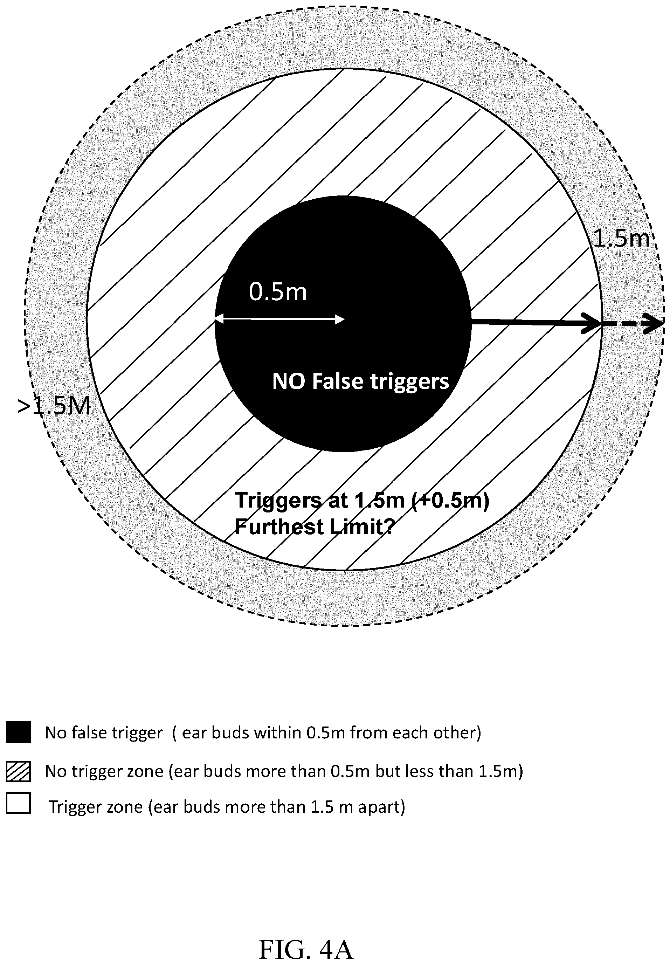

FIG. 4A shows an example of determining various thresholds of the method 200 based on distance between one ear bud and another ear bud. A first threshold where a high risk of misplacement is determined is When the distance between one ear bud and another ear bud is 0.5 metres or less (roughly the distance between two ears of a human being), no risk of misplacement should be detected as the two ear buds are likely to be in the user's left and right ears. When the distance between one ear bud and another ear bud is between 0.5 metres and 1.5 metres, there is unlikely a risk of misplacement but there could be false triggers depending on the electronic devices, speed and noise. When the distance between the two ear buds is above 1.5 metres, there is a high probability that one ear bud may have dropped or misplaced. Accordingly, 1.5 metres (m) is selected as the first threshold. It is contemplated that the first threshold may be set at other distances such as 2 m, 2.5 m, 1.4 m, 3 m, etc.

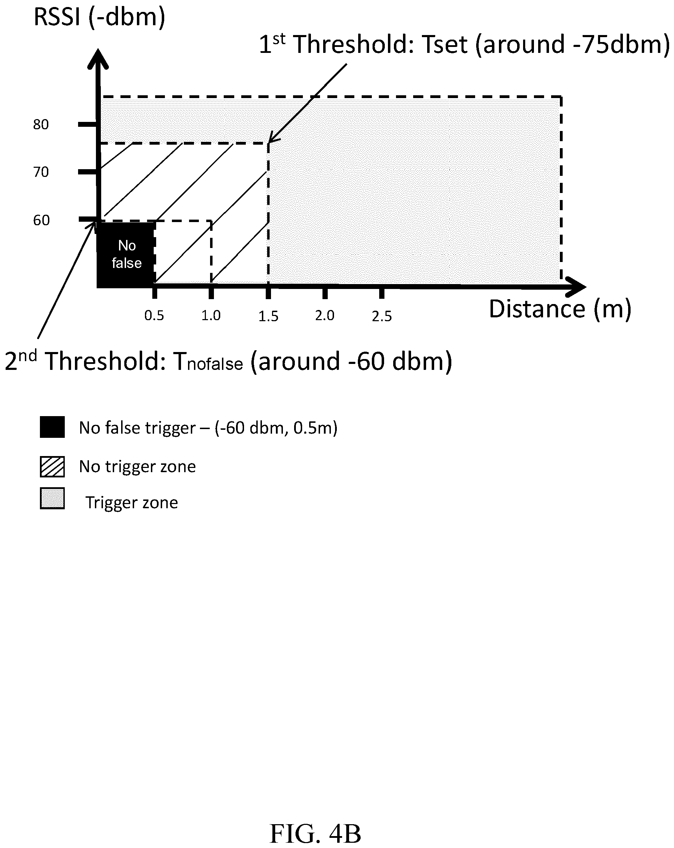

FIG. 4B shows a correlation graph between the distance and an indication of signal strength. An industry standard, such as RSSI measure (in negative -dbm where 0 dbm represents the strongest signal), may be used. In some embodiments, the first threshold of 1.5m corresponds to a RSSI value of -75 dbm, and accordingly the first threshold in terms of signal strength measure is set at -75 dbm. In some embodiments, a second threshold of `no false trigger' may be set. The second threshold corresponds to a distance of 0.5 m and correlated to a signal strength of -60 dbm. For any signal strength measurement between 0 to -60 dbm, no further comparison beyond step S206 may need to be carried out as it may be inferred that there is negligible risk of misplacement of an ear bud.

In some embodiments (not shown), any obtained signal strength measurements between -75 dbm and -60 dbm may require further input from other components (e.g. accelerometer) to detect changes in motion and/or orientation of an ear bud.

While FIG. 4A and FIG. 4B illustrate the determination of thresholds for detecting whether an ear bud is misplaced, it is contemplated that other distances may be selected when determining the thresholds associated with detecting whether another electronic device, such as mobile phone 110, is misplaced. For example, the first threshold may be 3m when determining if a mobile phone 110 is misplaced.

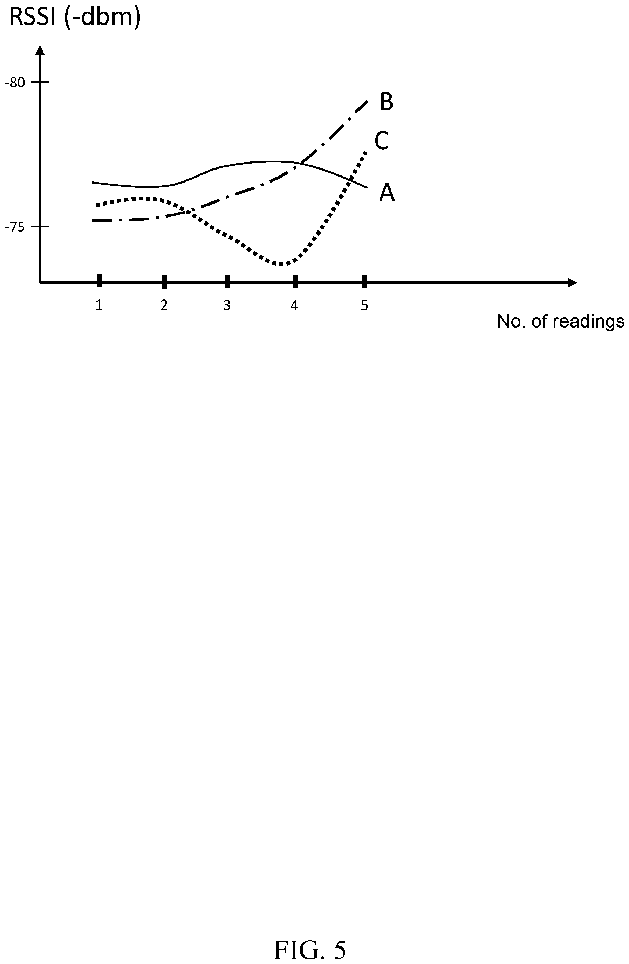

FIG. 5 illustrates possible first signal measurements obtained based on step S210 and the calculation of gradient measure step S212. Three plots labelled 'A', 'B', and 'C' are shown on FIG. 5 with different gradient profiles. As the first readings of all the plots are lower than the threshold of -75 dbm, four successive readings associated with the first signal measurements are obtained.

The gradient measure (G) may be obtained by a gradient descent method or other statistical methods such as obtaining the gradient between the first and second signal measurements, second and third signal measurements, third and fourth signal measurements, and fourth and fifth signal measurements, and then obtaining an average of the four gradient measurements.

Plot A is representative of a situation where the five RSSI readings are all below - 75 dbm but the second reading is larger than the first reading, and the fifth reading is larger than the fourth reading. There is a likelihood that the G measure of plot A returns a non-negative result. This may indicate that the ear bud device is not misplaced/dropped but is deliberately kept by the user.

Plot B is representative of a situation where the five RSSI readings are all below -75 dbm and the gradients are all negative, hence returning a negative gradient measure and triggering the method 200 to return a `misplaced state'.

Plot C shows that the third and fourth reading may fall below the threshold RSSI (-dbm), but as the fifth reading is lower than all the other readings, the overall gradient measure is likely to be negative, hence triggering the method 200 to return a `misplaced state'.

In general, the gradient measure (requiring the successive signal readings) is used as an additional indicator to verify if the first signal reading is a true indication that the electronic device is at a misplaced state.

In some embodiments (not shown), further measurements obtained from the accelerometer 142 may be used to supplement the gradient measure to provide a further indication of whether the electronic device is in a misplaced state. For example, as the plot A in FIG. 5 may return a near 0 result, accelerometer readings associated with the ear bud may be used to assist the final determination. For example, the accelerometer readings may provide measurements that the ear bud has moved at a high speed under the force of gravity, which indicates that the ear bud has dropped.

According to various embodiments, a circuit may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, firmware, or any combination thereof. Thus, in various embodiments, a "circuit" may be a digital circuit, e.g. a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also include a processor executing software, e.g. any kind of computer program, e.g. a computer program using a virtual machine code such as e.g. Java.

Examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth^{™} (e.g. Bluetooth 5.2, ZigBee, SigFox, LPWan, LoRaWan, GPRS, 3G, 4G, LTE, and 5G communication systems.

While the disclosure has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A system for determining a state of an electronic device, the system comprising
a processor arranged in wireless signal communication with the electronic device to obtain a first wireless signal of the electronic device, convert the first wireless signal to a first signal measurement, and compare the first signal measurement with a first threshold; wherein if the first signal measurement is less than the first threshold, the processor is operable to obtain a plurality of successive wireless signals associated with the first wireless signal and corresponding signal measurements over a predetermined period to determine a gradient measure, and if the gradient measure is negative over the predetermined period, the processor determines that the electronic device is in a first state.

2. The system according to claim 1, wherein the first signal measurement is a Received Signal Strength Indicator (RSSI) expressed in a negative scale.

3. The system according to claim 1 or 2, wherein the processor is operable to compare the first signal measurement with a second threshold, and if the first signal measurement is lower than the second threshold, the processor provides an electronic indication that the electronic device is not in the first state.

4. The system according to any one of the preceding claims, wherein the processor is a mobile computing device and the electronic device is a wireless ear bud, or wherein the processor is a wireless ear bud and the electronic device is another wireless ear bud or a mobile computing device.

5. The system according to claim 4, wherein the first state corresponds to the electronic device in a misplaced state.

6. The system according to any one of claims 4 or 5, wherein the mobile computing device is operable to activate a user interface and send a control signal to the electronic device to activate a notification, wherein the notification optionally comprises at least one of an audio notification and/or a visual notification.

7. A wireless ear bud device comprising
a control circuit operable to obtain or calculate a first signal measurement with respect to another wireless ear bud device and a second signal measurement with respect to an electronic device;
a first indicator device arranged to receive a first control signal from the control circuit to provide an indication of a first state of the another wireless ear bud device or the electronic device; and
a second indicator device arranged to receive a second control signal from the control circuit to provide an indication of the first state of the wireless ear bud device.

8. The wireless ear bud device according to claim 7, wherein the electronic device is a mobile computing device.

9. The wireless ear bud device according to claim 7 or 8, wherein the first indicator device is an audio speaker.

10. The wireless ear bud device according to any one of claims 7 to 9, wherein the second indicator device is an LED light.

11. The wireless ear bud device according to any one of claims 7 to 10, the control circuit operable to compare the first signal measurement with a first threshold value;
wherein if the first signal measurement is less than the first threshold, the control circuit is operable to obtain a plurality of successive signal measurements associated with the first signal measurement over a predetermined period and compute a first gradient measure, and if the first gradient measure is negative over the predetermined period, the control circuit sends the first control signal to first indicator device indicating that the another wireless ear bud or electronic device is in the first state.

12. The wireless ear bud device according to any one of claims 7 to 11, the wireless ear bud arranged in data or signal communication with the electronic device, the electronic device operable to compare the second signal measurement with respect to the wireless ear bud;
wherein if the second signal measurement is less than the first threshold, the electronic device is operable to obtain a plurality of successive second signal measurements over a predetermined period and compute a second gradient measure, and if the second gradient measure is negative over the predetermined period, the electronic device provides the second control signal to the second indicator device indicating that the wireless ear bud is in the first state.

13. The wireless ear bud of any one of claims 7 to 12, wherein the first state is a misplaced state.

14. The wireless ear bud of any one of claims 7 to 13, wherein the first signal measurement and the second signal measurement are Received Signal Strength Indicator (RSSI) values.

15. A method for determining a state of an electronic device comprising the steps of:
receiving a first wireless signal of the electronic device;
converting the first wireless signal to a first signal measurement; and
comparing the first signal measurement with a first threshold, such that if the first signal measurement is less than the first threshold, the method further comprises the steps of
obtaining a plurality of successive first wireless signals and corresponding first signal measurements over a predetermined period; and
determining a gradient measure;
wherein if the gradient measure is negative over the predetermined period, the electronic device is determined to be in a first state.
